# FASCICULE DE BREVET EUROPEEN

(11) **EP 1 997 576 B1**
(45) Date de publication et mention de la délivrance du brevet: **30.06.2010**
(21) Numéro de dépôt: 07109139.1
(22) Date de dépôt: 29.05.2007
(51) Int. Cl.: B23B 7/06, B23B 11/00, B23Q 1/62, G05B 19/19

(54) **Procédé pour assurer une fonction d'usinage accessoire sur une machine usinage par décolletage**
Verfahren zur Umsetzung einer zusätzlichen Formgebungsfunktion auf einer Bearbeitungsmaschine durch Abstecharbeit
Method for providing an additional machining function on a bar-turning machining machine

(43) Date de publication de la demande: 03.12.2008
(73) Titulaire: Tornos SA, 2740 Moutier (CH)
(72) Inventeur: Faivre, Bertrand, 2740, Moutier (CH)
(74) Mandataire: Scheuzger, Beat Otto

(56) Documents cités:
- EP-A- 0 226 836
- EP-A- 0 877 307
- DE-A1- 4 236 866
- FR-A- 2 275 267

## Description

L'invention se rapporte à un procédé pour assurer une fonction d'usinage accessoire sur une machine usinage par décolletage qui est existante et n'est pas, en tant que telle, capable d'assurer cette fonction d'usinage.

Un procédé selon la préambule de la revendication 1 est décrit dans EP-A-0 226 236.

L'invention se rapporte également aux machines de décolletage sur lesquelles le procédé est mis en oeuvre.

L'invention s'applique avantageusement à une machine de décolletage de type permettant de réaliser des dentures par fraisage d'une pluralité de rainures.

L'invention permet avantageusement la réalisation d'une fonction d'ébavurage sur une pièce pendant qu'un taillage de dents est effectué sur cette pièce.

Sur une machine de décolletage, le taillage d'une denture sur une pièce consiste à, au moyen d'un outil de fraisage entraîné en rotation, réaliser une pluralité de rainures dans une portion choisie d'une partie extrême d'une barre de matériau retenue dans une pince portée par une broche.

A cet effet, la barre de matériau est elle-même entraînée en rotation autour de son axe longitudinal et elle est déplacée en translation selon cet axe longitudinal, et ce, alternativement dans deux sens opposés de manière à être déplacée par rapport à la fraise au moins sur la longueur de la denture à réaliser.

En général, les rainures qui permettent de constituer la denture débouchent dans au moins une face de la pièce qui est orthogonale à son axe longitudinal.

Malgré le soin apporté, notamment, au choix des outils, l'homme de l'art constate la présence de bavures au niveau des arêtes formées à l'intersection des flancs des rainures avec la face de la pièce dans laquelle ces rainures débouchent.

Pour obvier à la présence de telles bavures, il est connu de prévoir une fonction d'ébavurage de pièces pendant leur taillage afin de ne pas avoir à reprendre les pièces pour les ébavurer après leur usinage sur la machine de décolletage.

A cet effet, les machines de décolletages commandées par cames comprenaient un dispositif permettant d'éliminer les bavures précitées.

Ce dispositif d'usinage connu comprend :
- un outil d'ébavurage,
- un chariot conçu pour supporter l'outil d'ébavurage et assurer son guidage dans une direction parallèle à l'axe longitudinal de la broche,
- un élément de liaison interposé entre, d'une part, le chariot qui porte l'outil d'ébavurage et, d'autre part, un mécanisme de commande d'un mouvement alternatif de déplacement en translation de la broche.

Ce dispositif était donc prévu sur des machines à cames et en faisait partie intégrante.

Les machines de décolletage actuelles sont des machines de type à commande numérique qui ne sont pas conçues pour permettre une telle fonctionnalité d'ébavurage et la tendance actuelle à utiliser ces machines pour réaliser des dentures sur des pièces, oblige les constructeurs à repenser ces machines pour y ajouter un nouveau dispositif capable de réaliser la fonction de déplacement d'un outil d'ébavurage pendant l'usinage.

Cela s'avère extrêmement onéreux, tant au plan de la conception, qu'au plan de la réalisation.

Un résultat que l'invention vise à obtenir est précisément un procédé pour assurer une fonction d'usinage accessoire sur une machine d'usinage existante qui n'est pas équipée pour assurer cette fonction d'usinage accessoire.

A cet effet l'invention a pour objet un procédé selon la revendication 1.

Des moyens fonctionnels pour la mise en oeuvre du procédé et des machines d'usinage sur lesquelles le procédé est mis en oeuvre sont également décrits.

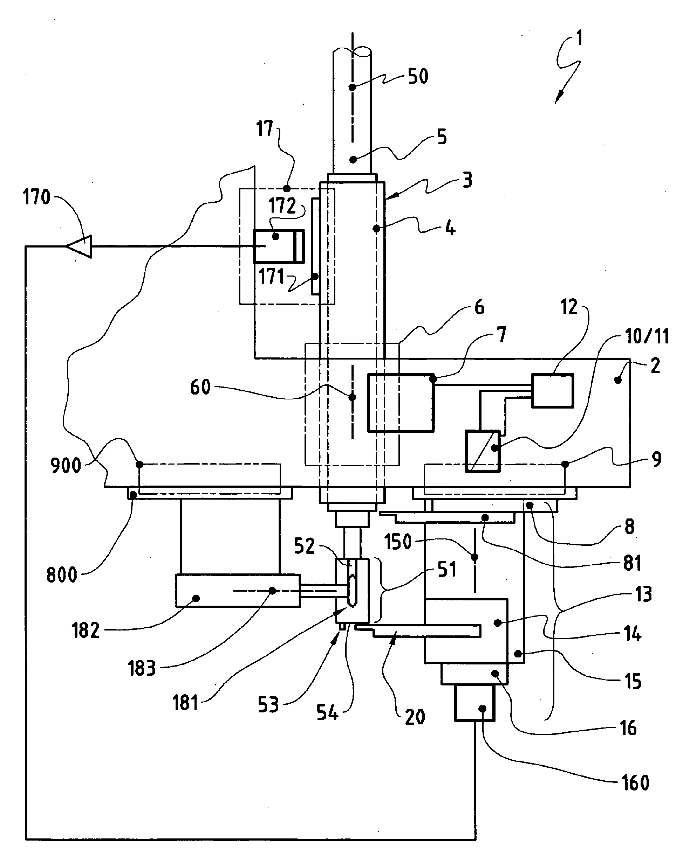

L'invention sera bien comprise à la lecture de la description ci-après faite à titre d'exemple non limitatif en regard du dessin ci-annexé qui représente schématiquement (figure 1) et en vue de dessus une partie d'une machine de décolletage sur laquelle est assurée une fonction d'usinage accessoire, conformément au procédé de l'invention.

En se reportant au dessin, on voit une machine d'usinage par décolletage, appelée machine de décolletage 1.

La machine de décolletage 1 comprend un bâti 2 supportant au moins :
- une poupée mobile 3 qui, d'une part, porte une broche 4 d'entraînement en rotation d'une barre de matériau 5 selon son axe longitudinal, appelé premier axe 50 et, d'autre part, est, par un moyen fonctionnel, appelé premier moyen de guidage 6, guidée en translation sur le bâti 2, selon un axe, qui appelé second axe 60, est parallèle audit premier axe 50,
- un organe moteur, appelé premier organe moteur 7, permet d'effectuer des déplacements de la poupée mobile 3 selon le second axe 60,
- un appareil pour le support d'outils qui, appelé premier appareil support 8, est, par un moyen fonctionnel, appelé second moyen de guidage 9, guidé en translation sur le bâti 2, selon au moins deux axes sécants, appelés troisième axe et quatrième axe, formant un plan orthogonal au second axe 60,
- deux autres organes moteurs qui, appelés second organe moteur 10 et troisième organe moteur 11, permettent d'effectuer des déplacements du premier appareil support 8 selon lesdits troisième axe et quatrième axe,
- un moyen fonctionnel qui, appelé premier moyen de commande 12, a pour fonction de piloter lesdits premier, second et troisième organes moteurs (7, 10, 11) en fonction d'un programme d'usinage préétabli, afin d'obtenir l'usinage de pièces dans la barre 5 de matériau retenue dans la broche 4.

De manière connue, le premier appareil support 8 porte une pluralité d'outils d'usinage 81 organisés en "peigne d'outils" et utilisés pour réaliser différentes opérations d'usinage d'une partie extrême 51 de la barre de matériau 5 qui dépasse de la broche 4.

De manière également connue, les organes moteurs (premier, organe moteur 7, second organe moteur 10, et troisième organe moteur 11 sont des organes moteurs électriques de type dit à commande numérique et le premier moyen de commande 12 est de type capable d'assurer la commande numérique de ces organes moteurs (7, 10, 11).

Pour assurer la fonction recherchée, d'usinage accessoire sur la machine de décolletage 1 :
- on se munit d'un autre appareil pour le support d'outils, appelé second appareil support 14 et on fixe ce second appareil support 14 sur le premier appareil support 8 par le biais d'un moyen fonctionnel qui, appelé troisième moyen de guidage 15, permet d'effectuer le guidage en translation du second appareil support 14, par rapport au premier appareil support 8 et selon un axe, appelé cinquième axe 150, parallèle au second axe 60, puis
- au plus tard après avoir fixé le second appareil support 14 sur le premier appareil support 8, on associe au second appareil support 14 un organe moteur qui, appelé quatrième organe moteur 16, permet d'effectuer des déplacements de ce second appareil support 14 selon le cinquième axe 150, et
- au moins lors de l'utilisation de la machine de décolletage 1, on détecte et on mesure chaque déplacement de la poupée mobile 3 selon le second axe 60 et, on commande le quatrième organe moteur 16 en fonction des déplacements de la poupée mobile 3 selon ledit second axe 60 de manière à obtenir des déplacements du second appareil support 14 selon le cinquième axe 150 qui sont synchronisés avec les déplacements de la poupée mobile 3 et dans le même sens que ceux-ci.

Ces particularités techniques permettent d'obtenir le résultat essentiel visé par l'invention, à savoir, assurer une fonction d'usinage accessoire sur une machine de décolletage 1 existante qui n'est pas équipée pour assurer cette fonction d'usinage accessoire.

Au terme des étapes du procédé selon l'invention, le bâti 2 de la machine de décolletage 1 supporte donc un dispositif d'usinage accessoire 13 qui permet de réaliser une opération d'usinage sur une face d'une pièce qui est en cours d'usinage, et ce, pendant que la pièce est déplacée en translation selon le second axe 60.

De manière également remarquable, pour détecter et mesurer chaque déplacement de la poupée mobile 3 selon le second axe 60, on associe à ladite poupée mobile 3 un ensemble fonctionnel qui, appelé ensemble de mesure 17, d'une part, permet de mesurer précisément la valeur de tout déplacement de la poupée mobile 3 et le sens de ce déplacement et, d'autre part, de former un signal 170 qui reflète la valeur et le sens du déplacement mesuré.

De manière préférentielle, on utilise un ensemble de mesure 17 de type comprenant une règle optique 171 et un lecteur 172 de cette règle qui est capable de produire le signal 170 qui reflète la valeur et le sens du déplacement mesuré.

De manière encore remarquable, on met en oeuvre un quatrième organe moteur 16 capable d'exploiter le signal 170 formé par l'ensemble de mesure 17, c'est-à-dire le signal qui reflète la valeur et le sens du déplacement mesuré.

De manière également préférentielle, on utilise un quatrième organe moteur 16 qui comprend un module 160 capable de convertir le signal 170 qui reflète la valeur et le sens du déplacement mesuré en informations capables d'assurer la commande de ce quatrième organe moteur 16.

Avantageusement, pour le support d'outils d'usinage, la machine de décolletage 1 comprend un autre appareil support qui, appelé appareil support conjugué 800, est, par rapport à un plan passant par le second axe 60, disposé symétriquement au premier appareil support 8.

L'appareil support conjugué 800, est, par un moyen fonctionnel, appelé quatrième moyen de guidage 900, guidé en translation sur le bâti 2, selon au moins deux axes sécants formant un plan orthogonal au second axe 60.

Tel que cela apparaît au dessin, la machine de décolletage comprend une unité de fraisage 18 qui est constituée par :
- un outil de fraisage 181,
- un organe moteur qui, appelé cinquième organe moteur 182,
   - d'une part, assure l'entraînement en rotation de l'outil de fraisage 181 autour d'un axe, appelé sixième axe 183 et,
   - d'autre part, est associé à l'appareil support conjugué 800 afin d'être déplacé et réglé en position par rapport à une portion d'extrémité 51 de la barre de matériau 5 qui dépasse de la broche 4, de manière telle que le déplacement alternatif en translation de la poupée mobile 3 permette la réalisation d'une pluralité de rainures 52 dans cette portion d'extrémité 51, engendrant par cela la formation de bavures 53 situées en saillie par rapport à une face 54 de la portion d'extrémité 51 qui est sécante au second axe 60.

De manière notable :
- on se munit d'un outil d'usinage 20 adapté à une fonction de suppression de bavures 53 situées en saillie par rapport à la face 54 de la portion d'extrémité 51 qui est sécante au second axe 60,
- on associe cet outil d'usinage 20 au second appareil support 14 en le positionnant de manière telle que lors de l'usinage de rainures 52, il soit maintenu tangent à la face 54 de la portion d'extrémité 51 et suive le déplacement en translation alternative de cette face 54 conséquemment au déplacement en translation alternative de cette face 54 par l'effet du déplacement de la poupée mobile 3.

## Revendications

1. Procédé pour assurer une fonction d'usinage accessoire sur une machine de décolletage (1) existante, cette machine de décolletage comprenant un bâti (2) supportant au moins :
- une poupée mobile (3) qui, d'une part, porte une broche (4) d'entraînement en rotation d'une barre de matériau (5) selon son axe longitudinal, appelé premier axe (50) et, d'autre part, est, par un moyen fonctionnel, appelé premier moyen de guidage (6), guidée en translation sur le bâti (2), selon un axe, qui appelé second axe (60), est parallèle audit premier axe (50),
- un organe moteur, appelé premier organe moteur (7), permet d'effectuer des déplacements de la poupée mobile (3) selon le second axe (60),
- un appareil pour le support d'outils qui, appelé premier appareil support (8), est, par un moyen fonctionnel, appelé second moyen de guidage (9), guidé en translation sur le bâti (2), selon au moins deux axes sécants, appelés troisième axe (91) et quatrième axe (92), formant un plan orthogonal au second axe (60),
- deux autres organes moteurs qui, appelés second organe moteur (10) et troisième organe moteur (11), permettent d'effectuer des déplacements du premier appareil support (8) selon lesdits troisième axe et quatrième axe,
- un moyen fonctionnel qui, appelé premier moyen de commande (12), a pour fonction de piloter lesdits premier, second et troisième organes moteurs (7, 10, 11) en fonction d'un programme d'usinage préétabli, afin d'obtenir l'usinage de pièces dans la barre (5) de matériau retenue dans la broche (4),
ce procédé étant **caractérisé en ce que** pour assurer la fonction d'usinage accessoire sur la machine de décolletage (1) :
- on se munit d'un autre appareil pour le support d'outils, appelé second appareil support (14) et on fixe ce second appareil support (14) sur le premier appareil support (8) par le biais d'un moyen fonctionnel qui, appelé troisième moyen de guidage (15), permet d'effectuer le guidage en translation du second appareil support (14), par rapport au premier appareil support (8) et selon un axe, appelé cinquième axe (150), parallèle au second axe (60),
- au plus tard après avoir fixé le second appareil support (14) sur le premier appareil support (8), on associe au second appareil support (14) un organe moteur qui, appelé quatrième organe moteur (16), permet d'effectuer des déplacements de ce second appareil support (14) selon le cinquième axe (150),
- au moins lors de l'utilisation de la machine de décolletage (1), on détecte et on mesure chaque déplacement de la poupée mobile (3) selon le second axe (60) et, on commande le quatrième organe moteur (16) en fonction des déplacements de la poupée mobile (3) selon ledit second axe (60) de manière à obtenir des déplacements du second appareil support (14) selon le cinquième axe (150) qui sont synchronisés avec le déplacements de la poupée mobile (3) et dans le même sens que ceux-ci.

2. Procédé selon la revendication 1, **caractérisé en ce que** pour détecter et mesurer chaque déplacement de la poupée mobile (3) selon le second axe (60), on associe à ladite poupée mobile (3) un ensemble fonctionnel qui, appelé ensemble de mesure (17), d'une part, permet de mesurer précisément la valeur de tout déplacement de la poupée mobile (3) et le sens de ce déplacement et, d'autre part, de former un signal (170) qui reflète la valeur et le sens du déplacement mesuré.

3. Procédé selon la revendication 1 ou 2, **caractérisé en ce qu'**on met en oeuvre un quatrième organe moteur (16) capable d'exploiter le signal (170) formé par l'ensemble de mesure (17), c'est-à-dire le signal qui reflète la valeur et le sens du déplacement mesuré.

4. Procédé selon la revendication 2, **caractérisé en ce qu'**on utilise un ensemble de mesure (17) de type comprenant une règle optique (171) et un lecteur (172) de cette règle qui est capable de produire le signal (170) qui reflète la valeur et le sens du déplacement mesuré.

5. Procédé selon la revendication 3, **caractérisé en ce qu'**on utilise un quatrième organe moteur (16) qui comprend un module (160) capable de convertir le signal (170) qui reflète la valeur et le sens du déplacement mesuré en informations capables d'assurer la commande de ce quatrième organe moteur (16).

6. Procédé selon l'une quelconque des revendications 1 à 5, mis en oeuvre sur une machine de décolletage (1) comprenant,
. un appareil support d'outils qui, appelé appareil support conjugué (800), est, par rapport à un plan passant par le second axe (60), disposé symétriquement au premier appareil support (8), et
. une unité de fraisage (18) qui est constituée par, un outil de fraisage (181) et un organe moteur qui, appelé cinquième organe moteur (182),
.. d'une part, assure l'entraînement en rotation de l'outil de fraisage (181) autour d'un axe, appelé sixième axe (183) et,
.. d'autre part, est associé à l'appareil support conjugué (800) afin d'être déplacé et réglé en position par rapport à une portion d'extrémité (51) de la barre de matériau (5) qui dépasse de la broche (4), de manière telle que le déplacement alternatif en translation de la poupée mobile (3) permette la réalisation d'une pluralité de rainures (52) dans cette portion d'extrémité (51), engendrant par cela la formation de bavures (53) situées en saillie par rapport à une face (54) de la portion d'extrémité (51) qui est sécante au second axe (60),
le procédé étant **caractérisé en ce que** :
- on se munit d'un outil d'usinage (20) adapté à une fonction de suppression de bavures (53) situées en saillie par rapport à la face (54) de la portion d'extrémité (51) qui est sécante au second axe (60),
- on associe cet outil d'usinage (20) au second appareil support (14) en le positionnant de manière telle que lors de l'usinage de rainures (52), il soit maintenu tangent à la face (54) de la portion d'extrémité (51) et suive le déplacement en translation alternative de cette face (54) conséquemment au déplacement en translation alternative de cette face (54) par l'effet du déplacement de la poupée mobile (3).

## Claims

1. Method for ensuring the accessory machining operation on an existing lathe (1), this lathe comprising a frame (2) supporting at least:
- an adjustable headstock (3), which, on the one hand, bears a spindle (4) for driving in rotation of a bar of material (5) along its longitudinal axis, referred to as axis (50), and, on the other hand, is, through a functional means, referred to as first guide means (6), guided in translation on the frame (5), along an axis, which, referred to as said first axis (50), is parallel to said first axis (50),
- a motor element, referred to as motor element (7), makes it possible to carry out displacements of the adjustable headstock (3) along the second axis (60),
- an apparatus for support of tools which, referred to as first support apparatus (8) is, through a functional means, referred to as second guide means (9), guided in rotation along the frame (2) along at least two secant axes, referred to as third axis (91) and fourth axis (92), forming a plane orthogonal to the second axis (60),
- two other motor elements which, referred to as second motor element (10) and third motor element (11), make it possible to carry out displacements to the first support apparatus (8) along said third axis and fourth axis,
- a functional means which, referred to as first control means (12) has as a function to navigate said first, second and third motor organs (7, 10, 11) as a function of a pre-established machining program, in order to obtain the machining of pieces in the bar (5) of material held in the spindle (4),
this method being **characterised in that** in order to ensure the accessory machining operation on the lathe (1):
- it is equipped with another apparatus for support of tools, referred to as second support apparatus (14), and this second support apparatus (14) is attached to the first support apparatus (8) through the agency of a functional means which, referred to as third guide means (15), makes it possible to carry out the guiding in translation of the second support apparatus (14), with respect to the first support apparatus (8) and along an axis, referred to as fifth axis (150), parallel to the second axis (60),
- at the very latest after having attached in a secure way the second support apparatus (14) on the first support apparatus (8), connected to the second support apparatus (14) is a motor element which, referred to as fourth motor element (16), makes it possible to carry out displacements of this second support apparatus (14) along the fifth axis (150),
- at least when using the lathe (1), each displacement of the adjustable headstock (3) is detected and measured along the second axis (60), and the fourth motor element (16) is controlled as a function of displacements of the adjustable headstock (3) along said second axis (60) in such a way as to obtain displacements of the second support apparatus (14) along the fifth axis (150) which are synchronized with the displacements of the adjustable headstock (3) and in the same direction as the aforementioned.

2. Method according to claim 1, **characterised in that** in order to detect and measure each displacement of the adjustable headstock (3) along the second axis (60), connected to said adjustable headstock (3) is a functional assembly which, referred to as measurement assembly (17), on the one hand, makes it possible to measure precisely the value of each displacement of the adjustable headstock (3) and the direction of this displacement , and, on the other hand, to produce a signal (170) which reflects the value and the direction of the measured displacement.

3. Method according to claim 1 or 2, **characterised in that** a fourth motor element (16) is implemented capable of using the signal (170) produced by the measurement assembly (17), i.e. the signal which reflects the value and the direction of the measured displacement.

4. Method according to claim 2, **characterised in that** a measurement assembly (17) is used on the type comprising an optical scale (171) and a reader (172) of this scale which is capable of producing the signal (170) which reflects the value and the direction of displacement measured.

5. Method according to claim 3, **characterised in that** used is a fourth motor element (16) which comprises a module (160) capable of converting the signal (170) which reflects the value and the direction of the displacement measured in data capable of ensuring the control of the fourth motor element (16).

6. Method according to any one of the claims 1 to 5, implemented on a lathe (1), comprising
. an apparatus for support of tools which, referred to as connected support apparatus (800) is, with respect to a plane passing through the second axis (60), disposed symmetrically with respect to the first support apparatus (8), and
. a unity of milling (18) which is constituted by a milling tool (181) and a motor element which, referred to as fifth motor element (182)
.. on the one hand, ensures the driving in rotation of the milling tool (181) about an axis, referred to as sixth axis (183), and
.. on the other hand, is connected to a connected support apparatus (800)in order to be displaced and adjusted in position with respect to an end portion (51) of the bar of material (5) which passes through the spindle (4) in such a way that the alternating displacement in translation of the adjustable headstock (3) makes it possible to achieve a plurality of grooves (52) in this end portion (51), thereby creating the production of seams (53) situated projecting with respect to a face (54) of the end portion (51) which is secant to the second axis (60),
the method being **characterised in that**:
- a machining tool (20) is provided adapted to a function of removal of seams (53) situated projecting with respect to the face (54) of the end portion (51) which is secant to the second axis (60),
- this machining tool (20) is connected to the second support apparatus (14) by positioning it in such a way that when machining grooves (52) it is held tangent to the face (54) of the end portion (51) and follows the alternating displacement in translation of this face (54) consistently with respect to the alternating displacement in translation of this face (54) through the effect of displacement of the adjustable headstock (3).

## Patentansprüche

1. Verfahren zum Gewährleisten einer zusätzlichen Funktion zur maschinellen Bearbeitung auf einer bestehenden Drehmaschine (1), welche einen Rahmen (2) aufweist, der mindestens die folgenden Elemente trägt:
- einen Reitstock (3), der einerseits eine Spindel (4) trägt für den Drehantrieb einer Materialstange (5) entlang ihrer als erste Achse (50) bezeichneten Längsachse, und der andererseits mittels eines als erstes Führungsmittel (6) bezeichneten Funktionsmittels auf dem Rahmen (2) entlang einer als zweite Achse (60) bezeichneten Achse, die parallel zur ersten Achse (50) ist, verschiebbar geführt ist,
- ein als erstes Motorelement (7) bezeichnetes Motorelement, welches entlang der zweiten Achse (60) das Durchführen von Bewegungen des Reitstocks (3) gestattet,
- ein Gerät zur Abstützung von Werkzeugen, das als erstes Abstützgerät (8) bezeichnet wird und mittels eines als zweites Führungsmittel (9) bezeichneten Funktionsmittels entlang mindestens zweier schneidender Achsen, die als dritte Achse (91) und vierte Achse (92) bezeichnet werden und eine zur zweiten Achse (60) orthogonale Ebene bilden, verschiebbar geführt ist,
- zwei weitere Motorelemente, die als zweites Motorelement (10) und drittes Motorelement (11) bezeichnet werden und das Durchführen von Bewegungen des ersten Abstützgeräts (8) entlang der dritten Achse und der vierten Achse gestatten,
- ein als erstes Steuerungsmittel (12) bezeichnetes Funktionsmittel, dessen Funktion es ist, das erste, das zweite und das dritte Motorelement (7, 10, 11) in Abhängigkeit vor einem vorbestimmten Programm zur maschinellen Bearbeitung zu steuern, um die maschinelle Bearbeitung von Stücken in der in der Spindel (4) gehaltenen Materialstange (5) zu erzielen,
wobei das Verfahren **dadurch gekennzeichnet ist, dass** zur Gewährleistung der zusätzlichen Funktion zur maschinellen Bearbeitung auf der Drehmaschine (1):
- ein als zweites Abstützgerät (14) bezeichnetes weiteres Gerät zur Abstützung von Werkzeugen verwendet vorgesehen ist und man dieses zweite Abstützgerät (14) auf dem ersten Abstützgerät (8) mittels eines als drittes Führungsmittel (15) bezeichneten Funktionsmittels befestigt, wodurch die Führung der Verschiebung des zweiten Abstützgeräts (14) bezüglich des ersten Abstützgeräts (8) und entlang einer als fünfte Achse (150) bezeichneten und zur zweiten Achse (60) parallelen Achse ermöglicht wird,
- spätestens nach dem Befestigen des zweiten Abstützgeräts (14) auf dem ersten Abstützgerät (8) dem zweiten Abstützgerät (14) ein als fünftes Motorelement (16) bezeichnetes Motorelement zugeordnet wird, wodurch Bewegungen dieses zweiten Abstützgeräts (14) entlang der fünften Achse (150) ermöglicht werden,
- mindestens während der Verwendung der Drehmaschine (1) jede Bewegung des Reibstocks (3) entlang der zweiten Achse (60) erfasst und gemessen wird und man das vierte Motorelement (16) in Abhängigkeit von den Bewegungen des Reitstocks (3) entlang der zweiten Achse (60) derart steuert, dass man Bewegungen des zweiten Abstützgeräts (14) entlang der fünften Achse (150) enthält, die mit den Bewegungen des Reitstocks (3) synchronisiert sind und in derselben Richtung wie diese verlaufen.

2. Verfahren nach Anspruch 1, **dadurch gekennzeichnet, dass** zum Erfassen und Messen jeder Bewegung des Reitstocks (3) entlang der zweiten Achse (60) dem Reitstock (3) eine als Messgruppe (17) bezeichnete Funktionsgruppe zugeordnet wird, die einerseits gestattet, den Wert jeglicher Bewegung des Reitstocks (3) und die Richtung dieser Bewegung genau zu messen, und andererseits ermöglicht, ein Signal (170) zu erzeugen, das den Wert und die Richtung der gemessenen Bewegungen widerspiegelt.

3. Verfahren nach Anspruch 1 oder 2, **dadurch gekennzeichnet, dass** man ein viertes Motorelement (16) bereitstellt, welches das durch die Messgruppe (17) erzeugte Signal (170), d.h. das Signal, welches den Wert und die Richtung der gemessenen Bewegung widerspiegelt, verwerten kann.

4. Verfahren nach Anspruch 2, **dadurch gekennzeichnet, dass** man eine Messgruppe (17) verwendet, welche eine optische Skala (171) und eine Lesevorrichtung (172) dieser Skala aufweist, die das Signal (170) erzeugen kann, welches den Wert und die Richtung der gemessenen Bewegung widerspiegelt.

5. Verfahren nach Anspruch 3, **dadurch gekennzeichnet, dass** man ein viertes Motorelement (16) verwendet, das ein Modul (160) aufweist, welches das Signal (170), das den Wert und die Richtung der gemessenen Bewegung widerspiegelt, in Informationen umwandeln kann, welche die Steuerung des vierten Motorelements (16) gewährleisten können.

6. Verfahren nach einem der Ansprüche 1 bis 5, das auf einer Drehmaschine (1) bereitgestellt wird, welche aufweist:
ein als konjugiertes Abstützgerät (800) bezeichnetes Abstützgerät für Werkzeuge, das bezüglich einer durch die zweite Achse (60) verlaufenden Ebene zum ersten Abstützgerät (8) symmetrisch angeordnet ist, und
- eine Fräseinheit (18), die durch ein Fräswerkzeug (181) und ein als fünftes Motorelement (182) bezeichnetes Motorelement gebildet ist,
- welches einerseits den Drehantrieb des Fräswerkzeugs (181) um eine als sechste Achse (183) bezeichnete Achse gewährleistet und
- welches andererseits dem konjugierten Abstützgerät (800) zugeordnet ist, um in seiner Position bezüglich eines Endabschnitts (51) der Materialstange (5), der über die Spindel (4) hinausragt, derart bewegt und geregelt wird, dass die Hin- und Her-Bewegung der Verschiebung des Reitstocks (3) die Erzeugung einer Vielzahl von Rillen (52) in diesem Endabschnitt (51) gestattet, wodurch die Bildung von Graten (53) bewirkt wird, die bezüglich einer Fläche (54) des Endabschnitts (51), welche die zweite Achse (60) schneidet, hervorstehen,
- wobei das Verfahren **dadurch gekennzeichnet ist, dass**:
- man ein Werkzeug zur maschinellen Bearbeitung (20) verwendet, das an eine Funktion zur Beseitigung von Graten (43) angepasst ist, die bezüglich der Fläche (54) des Endabschnitts (51), welche die zweite Achse (60) schneidet, hervorstehen, und
- man dieses Werkzeug zur maschinellen Bearbeitung (20) dem zweiten Abstützgerät (14) zuordnet, indem man es derart positioniert, dass es während der maschinellen Bearbeitung zur Herstellung von Rillen (52) tangential zu der Fläche (54) des Endabschnitts (51) gehalten wird und der Hin- und Her-Verschiebebewegung dieser Fläche (54) als Folge der Hin- und Her-Verschiebebewegung dieser Fläche (54) durch die Wirkung der Bewegung des Reitstocks (3) folgt.
